# EUROPEAN PATENT APPLICATION

(11) **EP 1 191 461 A1**
(43) Date of publication of application: **27.03.2002**
(21) Application number: 00929834.0
(22) Date of filing: 23.05.2000
(51) Int. Cl.: G06F 17/30

(54) **PORTABLE INFORMATION APPARATUS**

(30) Priority: 31.05.1999 JP 15122799
(71) Applicant: Access Co., Ltd., Tokyo 101-0064 (JP)
(72) Inventor: Kamada, Tomihisa, Access Co., Ltd., Tokyo 101-0051 (JP)
(74) Representative: Strehl Schübel-Hopf & Partner
(86) International application number: JP0003281
(87) International publication number: WO0073938

(57) **Abstract**

A file management table is provided for recording each file to be managed and as file selection conditions, a day of the week, time zone, current user location, and storage location information of an original file on a network. A file matching a current day of the week and a current user location as file selection conditions is retrieved at a predetermined time, based on the file management table. When no file matching the file selection conditions is found in the storage device of a portable information apparatus (10), the file is downloaded from an original file storage location on the network to be stored into an internal storage device. Thereby, a portable information apparatus is provided that can be operated to retain a file, highly probable to be accessed at a current point of time or a current location, in an internal storage device without requiring user's decision of choice/discard and operation.

## Description

### Technical Field

The present invention relates to a portable information apparatus such as a cellular phone with the data communication capability, a PDA (Personal Digital Assistant), a car navigation device, a portable small personal computer with the communication capability, etc.

### Background Art

Recently, with the widespread use of various types of portable information apparatuses such as those described above, it is possible for a user to access a desired server to use necessary data whenever the user wants and wherever the user is. Data, once accessed and stored into the nonvolatile storage device of a portable information apparatus, may be read from the storage device of the apparatus whenever the user wants to reference the same data again without having to access the external server.

However, a portable information apparatus, which is small in size, cannot have a large-capacity storage device, with the storage capacity being limited as compared with that of a non-portable personal computer. This limited storage capacity of a portable information apparatus frequently forces the user to decide whether to keep or discard data inside. Whether to keep or discard data is judged according to how much the user requires the data, based upon a user's operation.

It should be noted that, in many cases, a user accesses data (normally, a file) with some regularity. For example, in some cases, there could be a time-dependent tendency that a file is accessed by the user most frequently on holidays and some other file on weak days. Or, in some other cases, there could be a location-dependent tendency that a file is accessed more often at a particular location.

In view of the foregoing, it is an object of the present invention to provide a portable information apparatus capable of causing a file, highly probable to be accessed at a current point of time or in a current location, to be retained in an internal storage device without requiring user's decision of choice/discard and operation.

### Disclosure of Invention

To achieve the above object, the portable information apparatus according to the present invention, capable of accessing a desired data file via a communication medium, comprises a storage device in which a plurality of files may be stored; a file management table in which, for each file to be managed, at least one of temporal information and locational information, as a file selection condition, and original storage location information of the file are recorded; file searching means for searching for a file, which satisfies a given file selection condition at a predetermined time, based on the file management table; and downloading means for downloading a corresponding file from an original file storage location via the communication medium if there is no file satisfying the given file selection condition in the storage device.

For example, the temporal information is at least one of a day of the week and a time zone, and the locational information is longitude and latitude information.

With this arrangement, it is possible to store the files, highly probable to be accessed at the current time and at the current location, in the internal storage device without requiring the user to select them or to perform operation. In other words, the present invention automatically creates a state in which the files highly probable to be required are stored internally in the portable information apparatus according to the time and the place.

Preferably, the file management table further contains priority information to be referenced when the storage device does not have a capacity of storage sufficient for storing the downloaded file, and the apparatus further comprises means for deleting a lower-priority file existing in the storage device. The priority, which corresponds, for example, to the access frequency of each file, allows more frequently accessed files to be left in the storage device. This means a reduction in the number of times the files must be downloaded.

Preferably, the file management table further contains therein file storage information indicating whether or not the file is currently in the storage device, and this file storage information is referenced by the file searching means. This storage information, which acts as a flag, is referenced to speed up the file storage determination processing.

The portable information apparatus may further comprises an access history information table in which at least one of temporal information and locational information on an accessed file is recorded as file-access history information by the portable information apparatus; and condition extraction means for extracting the file selection condition based on the access history information recorded in the file-access history information table. This enables the file selection condition to be extracted automatically.

The predetermined time is, for example, at least one of when the apparatus is connected to the communication medium, when apparatus power is turned on, and when a user issues an instruction. The operation of the file searching means and the downloading means is preferably executed either during the time when the user activates no processing or in the background concurrently with user processing.

The present invention also includes a recording medium which has recorded thereon a computer readable program implementing the functions achieved by the above-described various means.

### Brief Description of Drawings

FIG. 1 is a diagram showing the usage of a portable information apparatus in an embodiment of the present invention;
FIG. 2 is a block diagram showing the general hardware configuration of the portable information apparatus to which the present invention is applicable;
FIG. 3 is a diagram showing an example of the configuration of a file management table 300 in which information, such as a file selection condition, on each file (data file) to be managed is stored in the embodiment of the present invention;
FIG. 4 is a diagram showing an example of the configuration of an file-access history information table 400 in which file-access history information by a user of the portable information apparatus is recorded in the embodiment of the present invention;
FIG. 5 is a flowchart showing general processing performed by the portable information apparatus in the embodiment of the present invention;
FIG. 6 is a flowchart showing processing performed when a user accesses an arbitrary file in the embodiment of the present invention; and
FIG. 7 is a flowchart showing an example of processing in which an access condition is automatically extracted based on the contents of the file-access history information table 400 in the embodiment of the present invention.

### Best Mode for Carrying Out the Invention

A preferred embodiment of the present invention will be described in detail below with reference to the attached drawings.

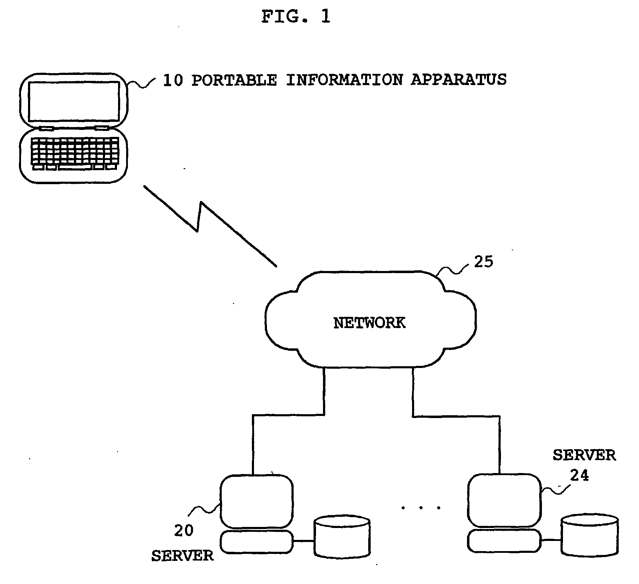

The usage of a portable information apparatus in the embodiment will be described with reference to FIG. 1.

A portable information apparatus 10 is, for example, a PDA with the communication capability, or a cellular phone, a car navigation device, or a portable small personal computer with the data communication capability.

The user may operate the portable information apparatus 10 at any location to connect to a network 25 (including the Internet) used as a communication medium, access one of desired servers 20, ..., 24, and reference desired data. At this time, the user downloads the file if necessary and stores it in the internal nonvolatile storage device. Once stored, the file may be referenced offline any time and at any location unless the file is erased.

As more and more files are stored in the internal storage device in this way, the free space where a new file is to be stored becomes insufficient. In this case, one or more of the files in the storage device must be erased to create a larger free space.

Although downloading a file and the associated file erasure may be done, of course, under instructions from the user, the present invention makes it possible to do such operations automatically under predetermined conditions. The following describes such operations in detail.

Assume that the servers 20, ..., 24 include not only various servers on the Internet but also user-dedicated servers on a particular LAN connected to the network 25. The "communication medium" used in the present invention may be a medium used for an infrared light communication or a cable communication between the portable information apparatus 10 and a computer.

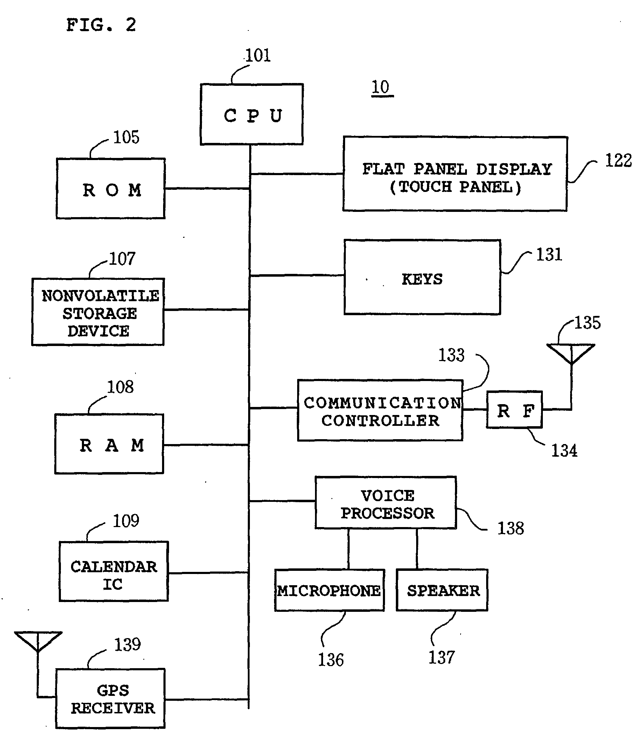

FIG. 2 shows an example of the general hardware configuration of the portable information apparatus 10. In this configuration, a central processing unit (CPU) 101 controls the entire operation of the portable information apparatus 10. Connected to the CPU 101 are a ROM 105, a nonvolatile storage device 107, a RAM 108, a calendar IC 109, a flat panel display 122, keys 131, a communication controller 133, a voice processor 138, and a GPS (Global Positioning System) receiver 139.

The ROM 105, a read-only nonvolatile memory, stores computer programs to be executed by the CPU 101 and necessary data.

The nonvolatile storage device 107, a re-writable storage device, stores various types of data the user wants to store on a nonvolatile basis. The data stored in this storage device includes communication addresses such as telephone numbers, FAX numbers, electronic mail addresses, URLs, and so on and downloaded file data. The nonvolatile storage device 107 may also store programs that may be upgraded. The nonvolatile storage device 107 may be not only a static storage medium such as a flash memory but also a dynamic recording medium such as various types of disks.

The RAM 108 provides temporary storage areas and work areas for storing data required by the CPU 101 for executing programs and areas for storing data required for program execution. The battery-operated calendar IC 109 constantly provides the user with the current date and time (including day of the week) information.

The flat panel display 122, which is a display device that provides the user with various information about the portable information apparatus, may have an input device, such as a touch panel, attached on the surface. The keys 131 are hardware keys used by the user to enter instructions into the apparatus.

The communication controller 133, a controller that controls wireless communication of voice and data, is connected to an antenna 135 via an RF unit 134 for processing wireless signals. The voice processor 138, which is means provided primarily on a portable information apparatus with the telephone capability or on a telephone with the PDA capability, is connected to a microphone 136 and a speaker 137 for voice input and output.

The GPS receiver 139 is means for identifying the current location of a user with the use of satellites. This receiver gives information on the longitude and latitude of the current location of the portable information apparatus 10.

Note that, in FIG. 2, the detailed configuration (for example, display memory, display controller, input/output controller, and so on) is omitted.

The operation of the apparatus according to the present invention, which has the hardware configuration described above, will be described. Before describing specific processing, the configuration of the tables used during the processing will be described.

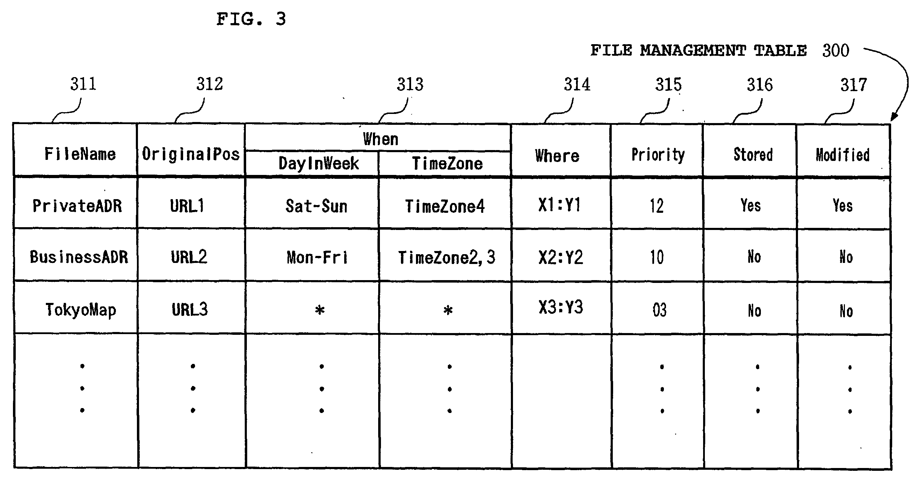

FIG. 3 shows an example of the configuration of a file management table 300 in which information such as file selection condition information about the files (data files) to be managed is stored. For each file to be managed, this table records a file name (FileName) 311, an original file storage location (OriginalPos) 312, a temporal file selection condition (When) 313, a locational file selection condition (Where) 314, a priority (Priority) 315, a file storage flag (Stored) 316, and a modification flag (Modified) 317. The temporal file selection condition 313 has two columns: day of the week (DayInWeek) and time zone (TimeZone). The time zone corresponds to the time zone stored in a history information table 400 that will be described later.

In the example shown in FIG. 3, the original file storage location 312 of the file "PrivateADR" that is a user's personal address book is indicated by "URL1"(URL: Universal Resource Locator). Based on this information, the file may be captured from the address as necessary. The user may manually enter the original file storage location 312 during preference setting. When the user accesses a file not stored in the file management table 300, it is also possible to store the file automatically in the table under user's instructions.

The day of the week information "Sat-Sun" (Saturday to Sunday) and the time zone information TimeZone4 are stored in the temporal file selection condition (When) 313 of the file "PrivateADR". These entries mean that it is preferable that the file is present in the portable information apparatus when the day of the week is Saturday or Sunday and when the time of day belongs to the fourth time zone. The user may specify in advance which of two logical operations, logical product or logical sum, should be performed for the day-of-the-week condition and the time zone condition, both of which are temporal conditions.

Similarly, the locational file selection condition (Where) 314 of the file "PrivateADR" is indicated by the longitude and latitude information "X1:Y1". This entry means that it is preferable that the file is present in the portable information apparatus when the current location is within a predetermined distance from the place of this longitude and latitude. Preferably, the user may variably set the "predetermined distance". The predetermined distance may vary from file to file.

The user may specify the temporal file selection condition 313 and the locational file selection condition 314 of each file during preference setting. As will be described later, they may also be automatically extracted and set based on the file-access history information.

The priority (Priority) 315 is data referenced when a file is erased from the storage device 107. In this example, the smaller the priority value is, the less frequently the file is used and the more probably the file is erased. In the example shown in the figure, the file "PrivateADR" has the priority of "12". This value is larger than the priority values of other files, indicating that this file is accessed more frequently. The numeric values in the priority 315 is updated automatically when the respective file is accessed.

The file storage flag (Stored) 316 is a flag indicating whether a file to be managed is currently present in the storage device of the portable information apparatus. In the example in the figure, "Yes" is set with respect to the file "PrivateADR" to indicate that the file is present inside. As will be described below, the value of the file storage flag 316 is automatically updated when the file is stored/erased.

The modification flag (Modified) 317 is a flag indicating that a file retained in the storage device has been changed. The example shown in the figure indicates that the file "PrivateADR" has been changed. For a file that has been changed, the change must be reflected on the original file at a predetermined point of time (this will be described later).

In the file management table 300, one of the file selection conditions of a particular file may be set to a non-setting status (indicated by "*" in the figure). For example, for the map data file named "TokyoMap" in the example shown in the figure, the value of the temporal file selection condition 313 is "*". This value indicates that a check is made for this file only for the locational file selection condition but not for the temporal file selection condition.

How the condition is evaluated when both the temporal file selection condition 313 and the locational file selection condition 314 are enabled will be described later.

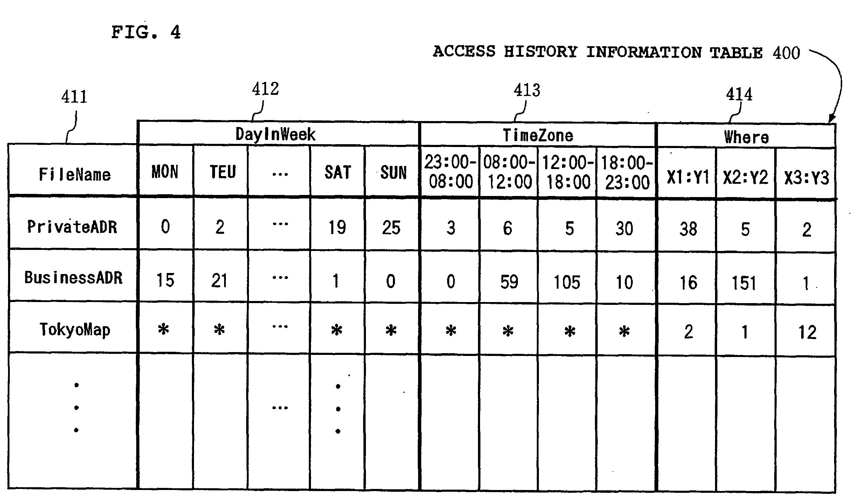

FIG. 4 shows an example of the configuration of the file-access history information table 400 in which history information on file access by the user of the portable information apparatus is recorded. This table is required for later described processing in which the file selection condition is automatically extracted based on the file-access history information. Therefore, this table is not necessary if the condition is not extracted automatically.

This file-access history information table 400 may have one of various configurations. In this example, the entries including a file name (FileName) 411, a day of the week (DayInWeek) 412, a time zone (TimeZone) 413, and a location (Where) 414 are recorded for each file to be managed. The day of the week 412 has seven columns, from Monday to Sunday. The time zone 413 has four time zone columns in this example. The location 414 has a fixed number of columns for predetermined locations, and it may have an additional new location column each time the file to be managed is accessed at a new location.

In the example in FIG. 4, each time a file to be managed is accessed, the numeric value in each of the day of the week, time zone, and location columns in the row of the corresponding file name is incremented (incremented by one in this example). When the numeric value of a particular column of the day of the week 412 of a file reaches a predetermined limit value (maximum value), predetermined processing (normalization) is performed for the numeric values in all columns of the day of the week 412. For example, all numeric values are reduced by a predetermined ratio (for example, 50%), or a predetermined numeric value is subtracted from all numeric values (if the resulting value becomes negative, the value is changed to 0). This predetermined numeric value may be fixed or may be dynamically determined such that the minimum value is forced to be 0. This numeric adjustment may be made for the numeric values in the time zone 413 or the location 414.

The capturing of history information on any one of the day of the week 412, time zone 413, and location 414 of a particular file may also be suppressed. In the example in FIG. 4, the predetermined symbol "*" is set in the day of the week 412 and the time zone 413 of the file "TokyoMap" to suppress the capturing of history information. The user may specify this suppression during preference setting.

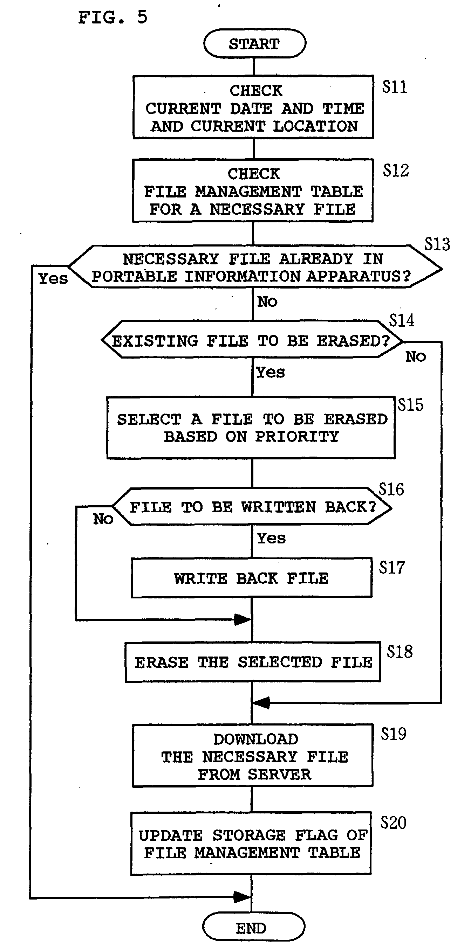

FIG. 5 is a flowchart showing the overview of processing performed for the portable information apparatus in this embodiment. This processing is executed by the CPU 101 according to the program stored in the ROM 105 at least when the power of the portable information apparatus is turned on, when the portable information apparatus is connected to the communication medium, or when an instruction is issued from the user. It is preferable that this processing is executed invisibly to the user either when the user is not executing processing or in the background concurrently with user processing.

In FIG. 5, first, a check is made for the current date and time (day of the week) and the current location with the use of the calendar IC 109 and the GPS receiver 139 (S11). Next, the file management table 300 is referenced to find a file that is necessary at the current date and time and at the current location (S12).

Now, with the file management table 300 in FIG. 3 as an example, assume that the current day of the week is Sunday, that the time is 12 minutes past 22 (22:12), and that the current location is X1:Y1. Then, the file satisfying the day-of-the-week condition, time zone condition, and locational condition is "PrivateADR". As described above, whether the day-of-the-week condition and the time zone condition should be logically ANDed or logically ORed is specified by the user. Whether these conditions and the locational condition should be logically ANDed or logically ORed may also be specified by the user in advance. When the logical AND condition is used, the file is selected if all of a plurality of conditions are satisfied. When the logical OR is used, the file is selected if at least one of a plurality of conditions is satisfied.

If the necessary file is determined in step S12, then a check is made if the file is already in the portable information apparatus (storage device 107) (S13). The result is instantly obtained by checking the file storage flag 316 of the file in the file management table 300 in FIG. 3. If the file is already in the portable information apparatus, the subsequent steps S14 - S20 are bypassed and the processing is terminated.

If the file is not in the portable information apparatus, the original file storage location 312 stored in the file management table 300 is referenced to access the file via the communication medium. If the file is larger than the current free space available in the storage device 107, it is decided that one of existing files must be erased (S14). For example, as a file to be erased, a file with the lowest numeric value in the priority 315 in the file management table 300 is selected (S15). After the erasure, if necessary free space is not yet obtained, the file with the next lowest priority is selected.

Next, a check is made if the file must be written back (S16). This is done by checking if the modification flag is "Yes" at least for the file to be erased. This is because, when the portable information apparatus has modified the contents of a file, the modification contents must be reflected on the original file. In addition to the files to be erased, all files with the modification flag value of "Yes" may also be selected as the files to be written back. The file selected in this way is written back to the original location (S17). In this case, either the entire file or only the modified part may be written back to the original file. The modification flag of the written-back file is reset to "No".

A file may be written back not only when the file is erased but also when the file is automatically downloaded or on a regular basis (for example, once a day) for the files whose modification flag value is "Yes". The file write-back operation, if performed in this manner before a file is erased, creates a backup copy of the file for use when the portable information apparatus fails or when the user loses it.

After that, the file to be erased from the storage device is erased (S18). Then, the necessary file is downloaded from the server into the storage device 107 (S19). At this time, the file storage flag 316 in the file management table 300 is updated (S20). That is, the file storage flag 316 of the erased file is changed from "Yes" to "No", the file storage flag 316 of the newly stored file is set to "Yes", and its modification flag 317 is set to "No".

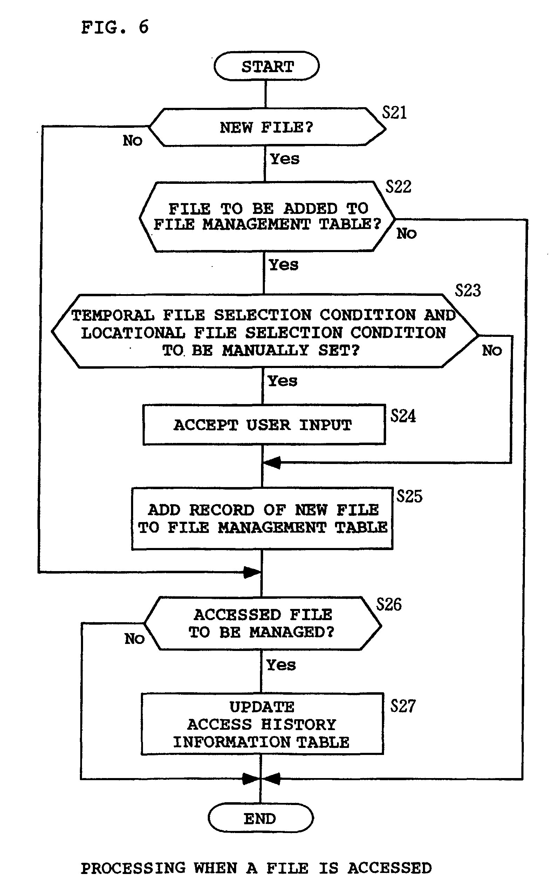

FIG. 6 is a flowchart showing processing executed by the CPU when the user accesses a file. In this case, the file accessed by the user may be a file that is currently stored in the storage device 107 or a file that was stored in the storage device in the past.

First, a check is made if the file to be accessed is already registered in the file-access history information table 400 (S21). If so, subsequent steps S22 - S25 are bypassed and control is passed to step S26.

If the file to be accessed is a new file (a file not yet registered), the user is asked to answer whether or not the file is to be registered with the file management table 300 (S22). If the user does not want to register the file for management, the processing is terminated. If the user wants to register the file for management, the user is asked to answer whether or not the user manually sets the file selection condition and priority items (S23). If the user does not manually set these items, step S24 is bypassed and control is passed to step S25. If the user manually sets these items, the user-entered conditions are accepted (S24). A record for the new file is added to the file management table 300 and, at the same time, the entered item data is registered if any (S25). If no item data is entered, the predetermined initial values are set.

Next, a check is made if the accessed file is to be managed (S26). As in step S21, this check is made by checking if the file name is found in the file management table 300. If the file is not to be managed, the processing is terminated. If the file is to be managed, the contents of the file-access history information table 400 are updated (S27). That is, the numeric values in the day of the week, time zone, and location columns in the row of the corresponding file name in the table are incremented (in this case, incremented by 1). Note that the columns of a file where the suppression symbol "*" is stored are ignored. For a file whose contents are changed, the modification flag 317 is changed from "No" to "Yes".

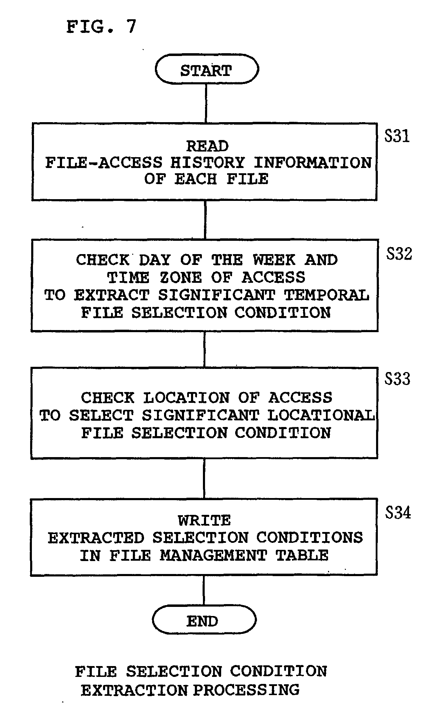

FIG. 7 is a flowchart showing an example of processing in which access conditions are extracted automatically based on the contents of the file-access history information table 400. This processing is executed by the CPU either in response to an instruction from the user or on a regular basis. As described above, the file-access history information table 400 and the processing shown in FIG. 7 are optional in the present invention.

In the processing shown in FIG. 7, the file-access history information on the files is read from the access history information table 400 (S31). Then, a check is made for the day of the week and the time zone to extract significant temporal file selection condition (S32). For example, the numeric values in the day of the week 412 (corresponds to access frequency) exceeding a predetermined threshold and the numeric values in the time zone column exceeding a predetermined value are selected. A "predetermined threshold" is, for example, a value smaller by a predetermined value than the maximum numeric value of the same type of condition. Preferably, this "predetermined value" is set by the user in advance. In general, the larger the predetermined value is, the more files match the selection condition. However, as described in FIG. 5, because some of the selected files are already in the storage device 107 in many cases, it is more likely that not all the files matching the above-described selection condition need be newly downloaded.

As an example, consider a case in which a value smaller than the maximum value by "10" is used as a threshold. In the example shown in FIG. 4, if the maximum value of the day of the week 412 is "25", then the threshold is "15" and therefore Saturday and Sunday are extracted as the selection condition for the file "PrivateADR". For the file "BusinessADR", Monday-Friday is extracted as the selection condition. The selection condition is extracted in the same manner also for the time zone 413. As shown above in FIG. 3, an extracted time zone condition is indicated by the number (TimeZoneN) of a time zone. A plurality of time zones may be extracted at the same time for the same file (See "BusinessADR" in FIG. 3). Because a plurality of time zone conditions for the same file cannot be satisfied at the same time, the logical OR operation is applied to the condition.

Next, the access places (locations) of the files are checked to extract significant locational file selection conditions (S33). In this case, as with the temporal file selection condition, the numeric value in each location column of a file is compared with a predetermined threshold to extract a locational file selection condition. Alternatively, a predetermined number (one or more) of the most-frequently accessed locations may be extracted for each file.

Finally, the file selection conditions extracted as described above are written in the corresponding positions in the file management table 300 (S34). In this way, the contents of the file selection conditions in the file management table 300 may be set up automatically without user's action by referring to the file access history of each user.
While the preferred embodiment of the present invention has been described, it is evident that many modifications and variations are possible. For example, the number of time zone divisions and the division boundaries are exemplary and are not limited to those shown in the figures of the present invention. It is also possible that only one of the temporal file selection condition and the locational file selection condition may be used. In addition, in step S14 in FIG. 5, a frequently updated file, even if present in the storage device, may be downloaded again. Although not shown in the figure, such a file may be specifically identified in the file management table for management. Also, although a file is employed as a unit for managing data in the above description, any data unit other than a file may be used for the management and the read/write of data.

### Industrial Applicability

The present invention allows a user with a portable information apparatus to have the files, which are likely to be accessed at the present time and in the present location, in the internal storage device. This apparatus reduces the number of operations the user must perform. The present invention also provides the user who is not familiar with computer operation with an easy-to-use portable information apparatus.

## Claims

1. A portable information apparatus capable of accessing a desired data file via a communication medium; comprising:
a storage device in which a plurality of files may be stored;
a file management table in which, for each file to be managed, at least one of temporal information and locational information, as a file selection condition, and original storage location information of the file are recorded;
file searching means for searching for a file, which satisfies a given file selection condition at a predetermined time, based on said file management table; and
downloading means for downloading a corresponding file from an original file storage location via the communication medium if there is no file satisfying the given file selection condition in said storage device.

2. The portable information apparatus according to claim 1, wherein said temporal information is at least one of a day of the week and a time zone.

3. The portable information apparatus according to claim 1, wherein said locational information is longitude and latitude information.

4. The portable information apparatus according to claim 1, 2, or 3, wherein said file management table further contains priority information to be referenced when said storage device does not have a capacity of storage sufficient for storing the downloaded file, and
said apparatus further comprising means for deleting a lower-priority file existing in said storage device.

5. The portable information apparatus according to any one of claims 1-4,
wherein said file management table further contains therein file storage information indicating whether or not the file is currently present in said storage device; and
wherein the file storage information is referenced by said file searching means.

6. The portable information apparatus according to any one of claims 1-5, further comprising:
an access history information table in which at least one of temporal information and locational information on an accessed file is recorded as file-access history information by said portable information apparatus; and
condition extraction means for extracting the file selection condition based on the file-access history information recorded in said access history information table.

7. The portable information apparatus according to claim 1, wherein said predetermined time is at least one of when said apparatus is connected to said communication medium, when apparatus power is turned on, and when a user issues an instruction.

8. The portable information apparatus according to claim 1, wherein an operation of said file searching means and said downloading means is executed during the time when said user activates no processing.

9. The portable information apparatus according to claim 1, wherein an operation of said file searching means and said downloading means is executed in background concurrently with processing said user has activated.

10. A recording medium which has recorded thereon a computer readable program that is installed into a portable information apparatus that accesses a desired data file via a communication medium and includes a storage device into which file data may be stored, said program implementing:
a function to record, for each file to be managed, at least one of temporal information and locational information, as a file selection condition, and original storage location information of the file into a file management table;
a function to search for a file, which satisfies a given file selection condition at a predetermined time, based on said file management table; and
a function to download a corresponding file from an original file storage location via the communication medium if there is no file satisfying the given file selection condition in said storage device.
